# EUROPEAN PATENT APPLICATION

(11) **EP 4 407 862 A1**
(43) Date of publication of application: **31.07.2024**
(21) Application number: 24153709.1
(22) Date of filing: 24.01.2024
(51) Int. Cl.: H02S 20/00

(54) **PLANT FOR THE PRODUCTION OF ELECTRICITY COMPRISING A TENSILE STRUCTURE INCLUDING GROUND SUPPORTS**

(30) Priority: 27.01.2023 IT 202300001320
(71) Applicant: Rem Tec S.R.L., 46041 Asola (MN) (IT)
(72) Inventor: REBOLDI, Alessandro, 25124 Brescia (BS) (IT); MALASPINA, Andrea, 46100 Mantova (MN) (IT); GHIDESI, Giancarlo, 46041 Asola (MN) (IT); KNOCHE, Ronald, 92380 Garches (FR)
(74) Representative: Di Gennaro, Sergio

(57) **Abstract**

Plant for the production of electricity positioned on a ground (G) comprising a tensile structure which keeps suspended a plurality of upper support cables (CS), parallel to each other and placed at a first predefined height from the ground and a plurality of lower support cables (CI), parallel to each other, and placed at a second height from the ground (G) equal to or lower than the first height, allowing a plurality of solar energy receptor devices (P) to be constrained between one of these upper cables and a lower one, so as to be substantially positioned inclined with respect to horizontally. The tensile structure comprises a plurality of elongated supports (SE, SIE, SII), connected to the ground with their lower portion and connected to such cables with their upper portion. Each of such supports is substantially "V" shaped, the vertex of which is associated with the ground and a lower support cable CI is associated with one of the wings of the V and an upper support cable CS is associated with the other.

## Description

The present invention refers to a plant for the production of solar and/or wind electricity formed by an elevated support structure and positioned on an agricultural ground, adapted to support devices adapted to receive sunlight, for example photovoltaic panels and/or wind modules.

Such plant is installable on agricultural grounds, leaving the possibility of using such ground for the original purposes, i.e. for cultivating vegetables, cereals, or for grazing animals.

The plant comprises a tensile structure which constitutes the elevated support structure for said devices.

In patent application US2017194894A1, various types of solar plants are described, wherein the photovoltaic panels are supported by tensile structures.

Agricultural installations can be also obtained below such plant.

For the purposes of the present invention, tensile structure means a structure made of materials kept in position by means of tension.

A photovoltaic plant is described in patent application WO2019049094 where greenhouses for cultivating vegetables are positioned in the same ground where the plant for the production of electricity is. The electricity produced by the plant is also used for supplying devices adapted to manage the cultivations (for example irrigators, environmental sensors placed inside and outside the greenhouse).

Systems for moving solar panels on two axes, which are generally referred to as "sunseekers", are further known.

Such a type of sunseeker is shown in patent application WO2010103378 which describes a supporting structure formed by support poles kept in position by a lattice of tie rods, both the support poles and the tie rods are fastened in the ground by means of a hinge pin.

The sunseeker comprises a main supporting horizontal profile, which can rotate around its own axis, to which a plurality of secondary profiles, perpendicularly fastened to the main profile and which can be rotated around their own axis, are connected. The solar panels are fastened on such secondary profiles. The ends of the main profile of the sunseeker are rested and fastened on support profiles.

In patent WO2013076573 a structure of support pilings of such type which also supports wind modules is described. Such structure is made two-dimensional and "checkerboard-shaped" and can be installed also on agricultural grounds as it is elevated and the distance between the support poles and so as to allow also impressive agricultural vehicles to pass.

In patent application WO2012/064189, a photovoltaic plant formed by an elevated support structure or tensile structure, wherein there are two overlapping layers, and the panels are positioned between the two layers, is described. The panels themselves are flexible, the plant is two-dimensional and checkerboard-shaped, and the tensile structure is supported by vertical poles placed at the four sides of the checkerboard. The applicant observed that the support structures for the solar devices should be particularly resistant, for example when the plant is of remarkable size, but at the same time they should not be bulky to allow the agricultural vehicles to pass on the cultivated ground below the plant. For example, the plant of patent application WO2012/064189 does not have intermediate pilings, but only at the four sides of the checkerboard and therefore such structure cannot necessarily be large-sized.

An object of the present invention is to make a plant wherein the pilings are capable of supporting remarkable weights and then supporting large-sized plants, meanwhile leaving enough space for the agricultural vehicles, which are large-sized by nature, to easily circulate below the plant on the cultivable ground.

An aspect of the present invention relates to a plant having the features of the attached claim 1.

Further features of the present invention are contained in the dependent claims.

The features and advantages of the present invention will be more apparent from the following exemplary and non-limiting description of an embodiment of the invention, referred to the attached schematic drawings, wherein:

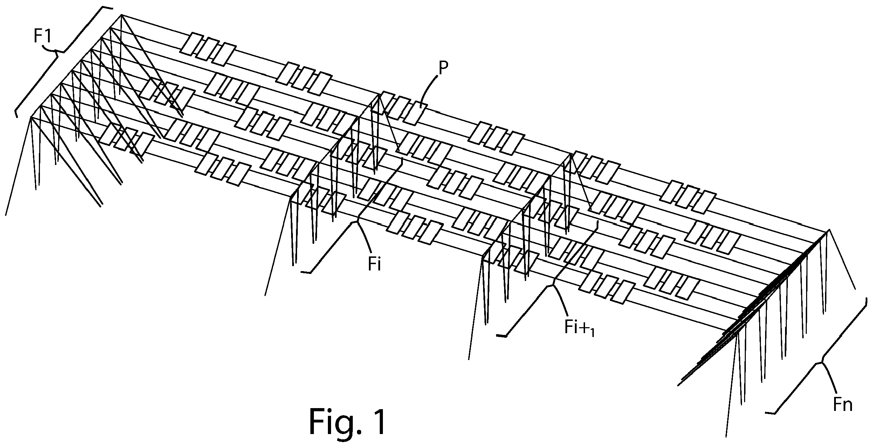

- figure 1 illustrates a schematic perspective view of the plant according to the present invention;

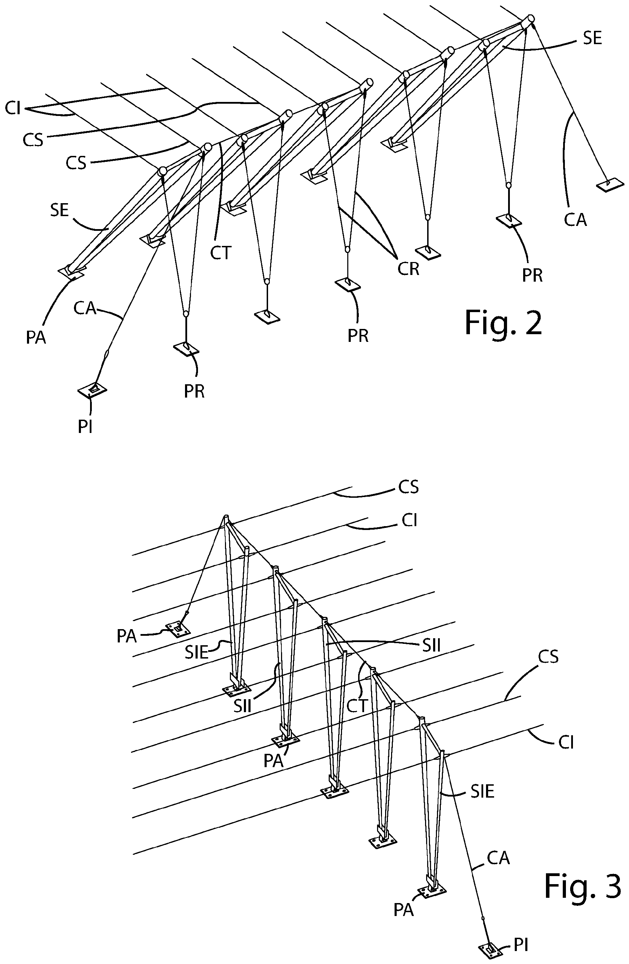

- figure 2 illustrates a schematic perspective view of the right end portion of the plant of figure 1;
- figure 3 illustrates a schematic perspective view of an intermediate portion of the plant of figure 1;

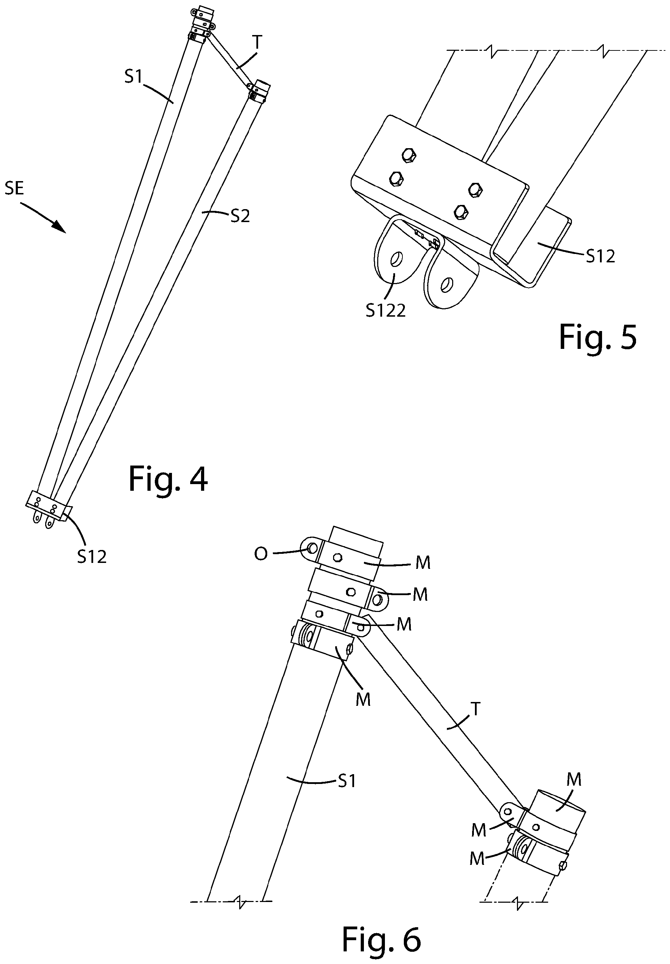

- figure 4 illustrates a perspective view of an end support of the plant of figure 1;
- figure 5 illustrates a perspective view of the lower portion or base of the end support of figure 4;
- figure 6 illustrates a perspective view of the upper portion of the end support of figure 4;

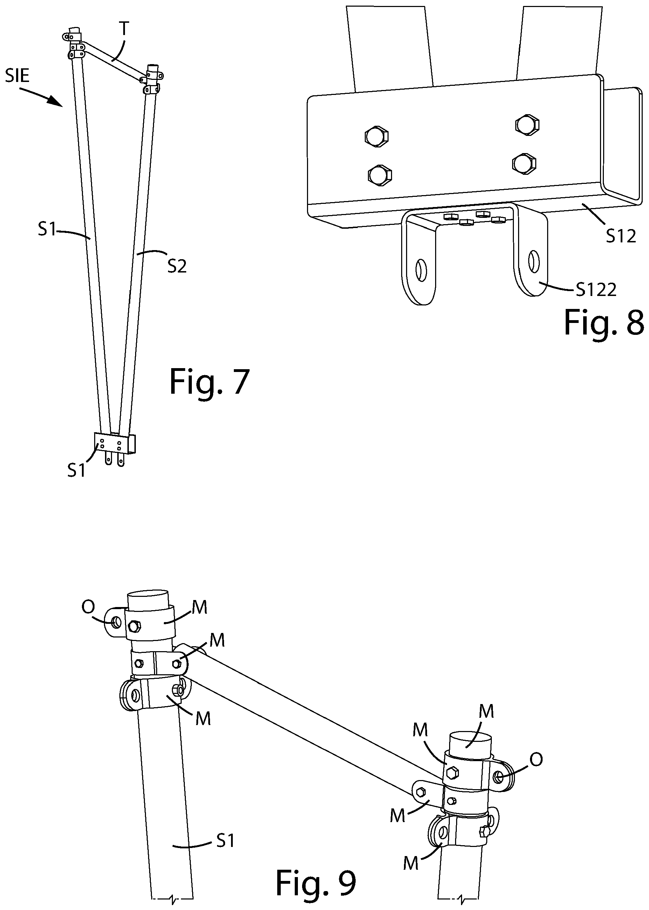

- figure 7 illustrates a perspective view of an external intermediate support of the plant of figure 1;
- figure 8 illustrates a perspective view of the lower portion or base of the external intermediate support of figure 7;
- figure 9 illustrates a perspective view of the upper portion of the external intermediate support of figure 7;

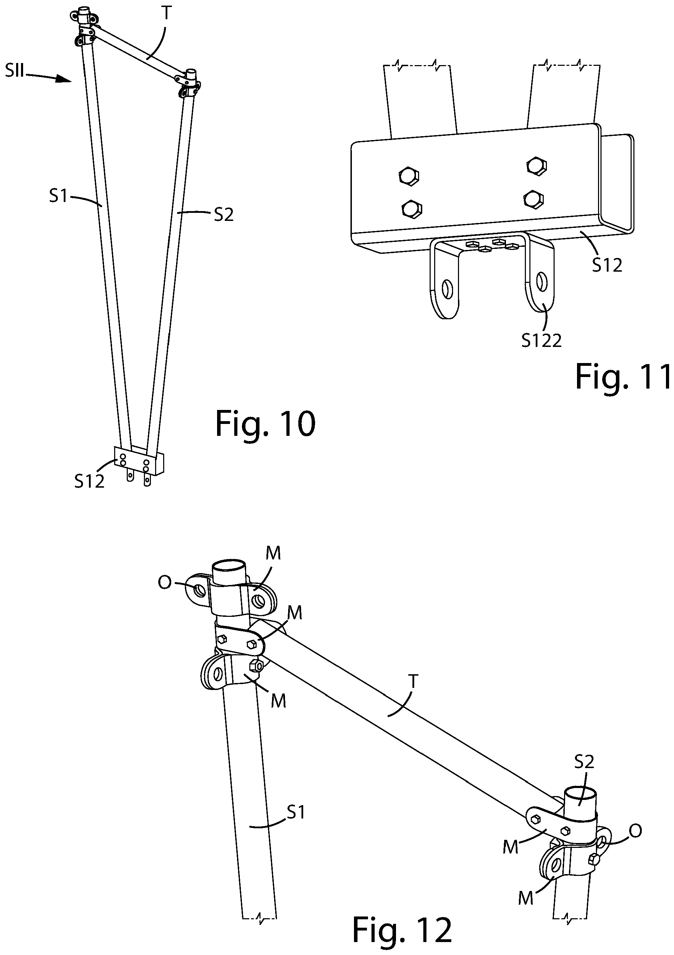

- figure 10 illustrates a perspective view of an internal intermediate support of the plant of figure 1;
- figure 11 illustrates a perspective view of the lower portion or base of the internal intermediate support of figure 10;
- figure 12 illustrates a perspective view of the upper portion of the internal intermediate support of figure 10;

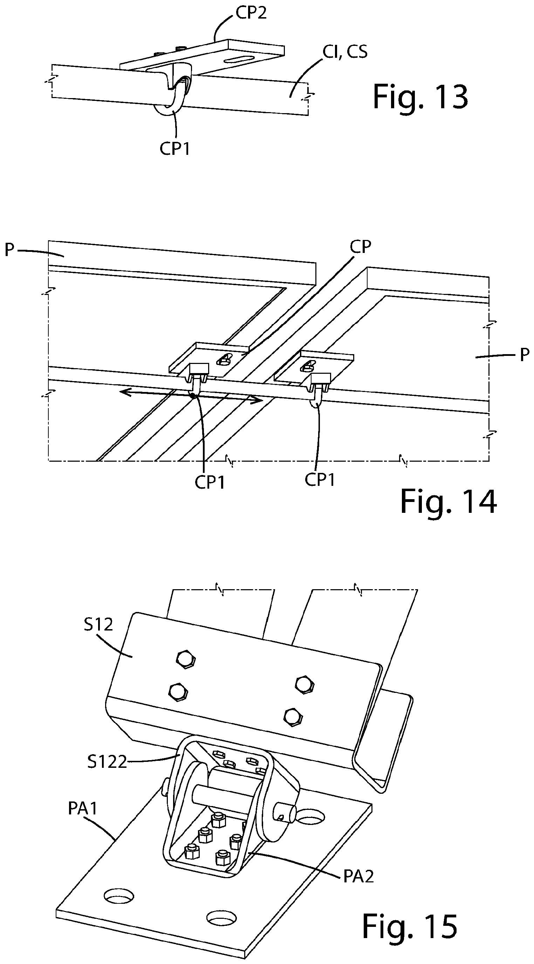

- figure 13 illustrates a perspective view of a hooking bracket of the photovoltaic panels to a connecting cable of the plant of figure 1;
- figure 14 illustrates a perspective view of two hooking brackets of the panels placed side by side and constrained on the same connecting cable of the plant of figure 1;
- figure 15 illustrates a perspective view of a base plate of the plant for supporting an end support;

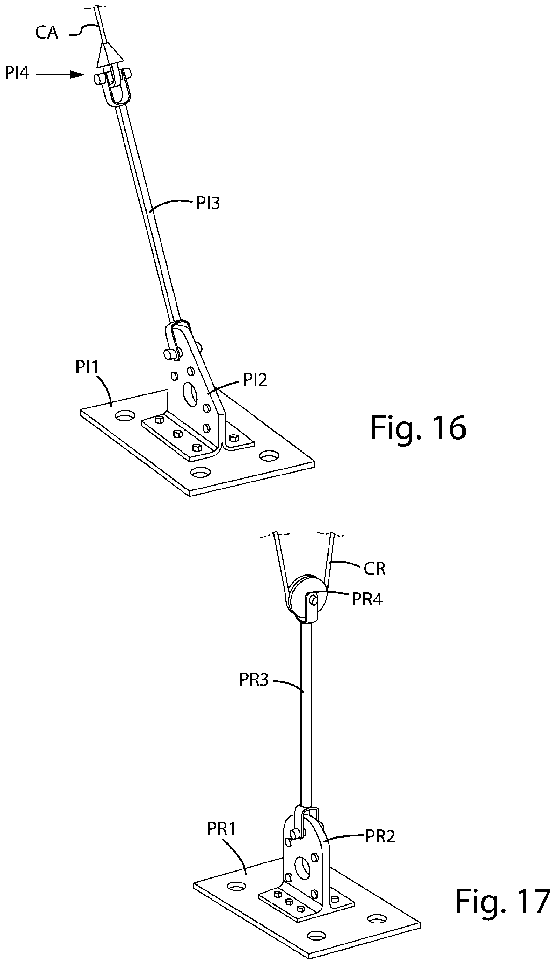

- figure 16 illustrates a perspective view of inclined means for anchoring the supports of the plant according to the present invention;
- figure 17 illustrates a perspective view of vertical means for anchoring the supports of the plant according to the present invention.

With reference to the mentioned figures, the plant for the production of electricity according to the present invention is positioned on an agricultural ground G and essentially comprises a tensile structure which keeps suspended a plurality of upper support cables CS, parallel to each other and placed at a first predefined height from the ground and a plurality of lower support cables Cl, parallel to each other, and placed at a second height from the ground G equal to or lower than the first height, allowing a plurality of solar energy receptor devices P to be constrained between one of these upper cables and a lower one, so as to be substantially positioned inclined with respect to horizontally.

These upper and lower support cables are supported by a plurality of elongated supports, connected to the ground with their lower portion and connected to such cables with their upper portion.

According to an aspect of the present invention, each of such supports is substantially "V" shaped, the vertex of which is associated with the ground and a lower support cable CI is associated with one of the wings of the V and an upper support cable CS is associated with the other.

Such supports are preferably organized in a plurality of parallel rows F1-Fn so that the plant is checkerboard-shaped, having the upper and lower cables parallel to each other. Furthermore, in each row Fi the supports are aligned so that the parallel rows of cables have an upper cable CS alternating with a lower one CI.

Such supports comprise end supports SE positioned in the end rows F1 and Fn of the plant and intermediate supports positioned in the intermediate rows Fi of the plant. Such intermediate supports are in turn divided in each intermediate row into external intermediate supports SIE, which include the first and last support of the row and internal intermediate supports SII which include all the supports included between the first and the last of the row.

Preferably, the supports of the end rows F1 and Fn are positioned inclined with respect to the vertical, leaning towards the outside of the checkerboard and in a direction parallel to the support cables CS and CI. The plant comprises, for each row of supports F1...Fn, means for anchoring the row to the ground comprising a transversal cable CT which joins at least one of the wings of all the supports of the row and a pair of anchor cables CA, placed at the respective ends of the row, which are positioned inclined towards the ground. Such anchor cables CA are preferably leaning towards the outside of the checkerboard and in a direction parallel to the transversal cable CT of the row.

Such means for anchoring the rows of ground supports further comprise a plate for anchoring to the ground PA for each support and two interface plates PI each associated with a respective anchor cable which constrain it to the ground G.

Each support is constrained in an articulated manner to the respective anchoring plate PA, so as to be inclined with respect to the vertical position. Indeed, such plate comprises a plaque PA1 which is constrained to the ground surmounted by a bracket PA2, substantially upward U-shaped, which is constrained in an articulated manner to a similar bracket S122 present at the conjunction of the two wings.

The interface plate PI comprises a base plaque PI1 which is fastened to the ground an angled bracket PI2 which is constrained in an articulated manner to an end of a tie rod PI3 which at the other end is in turn constrained to the end of the anchor cable CA.

Means for adjusting the tension PI4 of the anchor cable CA are provided between the anchor cable and the tie rod PI3.

The end rows F1 and Fn, as indicated above, have the supports inclined with respect to the vertical, then the means for anchoring such end rows also comprise means for adjusting the inclination of the end supports PR. Such means for adjusting the inclination comprise a plate PR1 for fastening to the ground T, a hooking bracket PR2 for a hooking rod PR3 at the upper end of which a pulley PR4 is provided, on which a hooking cable CR engages, the ends of which are substantially constrained to the tops of the wings of the V of the end supports SE.

Preferably, such hooking cables CR are also V-shaped as the supports in order to reduce the number of anchor points thereby.

The pulley retained by the tie rod allows to adjust the traction on both the wings of the V so as to keep the tie rod inclined in static equilibrium. Preferably, each support comprises a pair of rods S1 and S2, which constitute the aforementioned wings, joined to their lower end by a fastening element S12 to form the apex of the "V" and a crosspiece T which substantially joins the free ends of the rods.

Preferably, one of the two rods S1 or S2 is shorter than the other so that the upper cables CS constrained to the end of such rod are at a higher level than the lower cables Cl, which are bound to the other rod S2 or S1. Alternatively, one of the two rods can be more inclined than the other to create such difference in height. In both cases, the crosspiece T is inclined.

In proximity to the tops of the wings, in the exemplarily illustrated case substantially on the tops of the rods S1 and S2 crimping means MA for the upper CS or lower CI cables, for the transversal cables CT, for the anchor cables CA, for the hooking cables CR, and for the crosspieces T are provided. Such crimping means comprise a plurality of sleeves M which fit on the rods S1 or S2 provided with eyelets for hooking to the cables or to the crosspiece T.

The photovoltaic panels P are connected to the upper CS and lower CI cables by means of fastening means which comprise a clip CP1 which crimps on the cable and a support bracket CP2 which is constrained to the lower surface of the panel. By the way, such means allow the panel to suitably translate along the cables CI and CS, so as to vary the position thereof.

In addition to the mentioned panels, a system of anti-hail and/or shading nets, or nets or cloths integrating cells or systems for the production of energy from a photovoltaic source, movable and/or fixed, which can be crimped to such cables of the tensile structure can be also associated with the tensile structure according to the present invention, in particular with the upper support cables.

A plant thus made can be remarkable-sized. For example, the supports SE, SIE or SII can reach heights of about 8 metres and above.

A plant according to the present invention can have, for example, repeatable bays each of 15-25 metres with respect to the ground, distance between the rows included between 3 and 12 metres, height above the floor included between 4 and 6 metres.

## Claims

1. Plant for the production of electricity located on land (G) essentially comprising a tensile structure which keeps suspended a plurality of upper support cables (CS), parallel to each other and placed at a first predefined height from the ground, and a plurality of lower support cables (CI), parallel to each other, and placed at a second height from the ground (G) equal to or lower than the first height, allowing a plurality of solar energy receptor devices (P) to be constrained between one of these upper cables and a lower one, so as to be substantially positioned inclined with respect to horizontally,
said tensile structure comprises a plurality of elongated supports (SE, SIE, SII), connected to the ground with their lower portion and connected to these cables with their upper portion,
**characterized in that** each of these supports is substantially "V" shaped, the vertex of which is associated with the ground and a lower support cable CI is associated with one of the wings of the V and an upper support cable CS is associated with the other.

2. Plant according to claim 1, wherein said elongated supports are organized in a plurality of parallel rows (F1-Fn) of supports, so that the plant is checkerboard-shaped, having the upper and lower cables parallel to each other.

3. Plant according to claim 2, wherein in each row (Fi) the supports are aligned so that the parallel rows of cables have an upper cable (CS) alternating with a lower one (CI).

4. Plant according to claim 1, wherein such elongated supports comprise end supports (SE) positioned in the end rows (F1 and Fn) of the plant and intermediate supports positioned in the intermediate rows (Fi) of the plant.

5. Plant according to claim 4, wherein said intermediate supports are in turn divided in each row into external intermediate supports (SIE), which include the first and last support of the row, and internal intermediate supports (SII) which include all the supports included between the first and the last of the row.

6. Plant according to claim 5, wherein the supports of the end rows (F1 and Fn) are positioned inclined with respect to the vertical, leaning towards the outside of the chessboard and in a direction parallel to the upper (CS) and lower (CS) support cables.

7. Plant according to claim 2, wherein for each row of supports it comprises means for anchoring the row to the ground comprising a transversal cable (CT) which joins at least one of the wings of all the supports in the row and a pair of anchor cables (CA), placed at the respective ends of the row, which are positioned inclined towards the ground.

8. Plant according to claim 6, wherein said anchoring means for the end rows comprise means for adjusting the inclination of the end supports (PR).

9. Plant according to claim 8, wherein said tilt adjustment means comprise a plate (PR1) for fastening to the ground (G), a hooking bracket (PR2) for a hooking rod (PR3) at the upper end of which a pulley (PR4) is provided, on which a hooking cable (CR) engages, the ends of which are substantially constrained to the tops of the wings of the V of the end supports (SE).

10. Plant according to claim 1, wherein each support comprises a pair of rods (S1, S2), which constitute the aforementioned wings, joined at their lower end by a fastening element (S12) to form the apex of the "V" and a crosspiece (T) which substantially joins the free ends of the rods.

11. Plant according to claim 10, in which one of the two rods (S1 or S2) is shorter than the other, so that the upper cables (CS) constrained to the end of this rod are at a higher level than the lower cables (CI) which are bound to the other rod (S2 or S1).

12. Plant according to claim 1, wherein photovoltaic panels (P) are constrained to the upper (CS) and lower (CI) cables by means of fastening means which comprise a clip (CP1) which crimps onto the respective cable (CS or CI) and a support bracket (CP2) which is constrained to the lower surface of the panel, so as to allow the translation of the panels on the cables.
